# EUROPEAN PATENT APPLICATION

(11) **EP 4 095 686 A2**
(43) Date of publication of application: **30.11.2022**
(21) Application number: 22169874.9
(22) Date of filing: 26.04.2022
(51) Int. Cl.: G06F 9/451, G06F 9/445

(54) **METHOD FOR SWITCHING SKIN OF MINI-PROGRAM PAGE, AND ELECTRONIC DEVICE**

(30) Priority: 27.04.2021 CN 202110460561
(71) Applicant: Apollo Intelligent Connectivity (Beijing) Technology Co., Ltd., Beijing 100176 (CN)
(72) Inventor: Li, Mingde, Beijing, 100176 (CN)
(74) Representative: Maiwald GmbH

(57) **Abstract**

A method and an apparatus for switching a skin of a mini-program page, and an electronic device are disclosed. The specific implementation scheme is: receiving (S101) a skin switching request for the mini-program page, in which the skin switching request includes identification information of a target skin; acquiring (S102) a configuration file of the target skin based on the identification information; and sending (S103) the configuration file of the target skin to a mini-program, in which the configuration file of the target skin is configured to generate the target skin to which a current skin of the mini-program page is switched.

## Description

### TECHNICAL FIELD

The disclosure relates to a field of computer technologies, and particularly relates to a method for switching a skin of a mini-program page, an electronic device, a storage medium and a computer program product.

### BACKGROUND

A mini-program is an application that may be used without downloading and installation of the application and may be opened by a user by scanning a QR code, searching, etc. The mini-program is widely applied due to convenience and small occupied space, which facilitates people's daily life, for example, the user may use a mini-program for ordering, shopping, etc.

### SUMMARY

A method and an apparatus for switching a skin of a mini-program page, an electronic device, a storage medium and a computer program product are provided.

According to a first aspect, a method for switching a skin of a mini-program page is provided, and includes: receiving a skin switching request for the mini-program page, in which the skin switching request includes first identification information of a target skin; acquiring a configuration file of the target skin based on the first identification information; and sending the configuration file of the target skin to a mini-program, in which the configuration file of the target skin is configured to generate the target skin to which a current skin of the mini-program page is switched.

Optionally, the skin switching request includes a first uniform resource locator, URL, in which, acquiring the configuration file of the target skin based on the first identification information, includes: extracting the first URL from the skin switching request, and performing address parsing on the first URL to acquire second identification information carried in the first URL as identification information to be replaced; replacing the identification information to be replaced in the first URL with the first identification information to generate a second URL; and acquiring a configuration file with a storage path of the second URL as the configuration file of the target skin.

Optionally, the first URL includes at least one of: a preset default URL; a URL corresponding to the current skin of the mini-program page.

Optionally, acquiring the configuration file of the target skin based on the first identification information, includes: determining whether the configuration file of the target skin exists in a local storage based on the first identification information; and acquiring the configuration file of the target skin from the local storage in response to the configuration file of the target skin existing in the local storage.

Optionally, the method further includes: sending a skin download request to a server in response to no configuration file of the target skin existing in the local storage, in which, the skin download request includes the first identification information used by the server to acquire the configuration file of the target skin; and receiving the configuration file of the target skin sent by the server.

Optionally, the method further includes: acquiring an integrity verification code of a configuration file of a skin based on the configuration file of the skin, and verifying an integrity of the configuration file of the skin based on the integrity verification code; and/or, acquiring a set of identification information, and verifying a legitimacy of a configuration file of a skin; and deleting the configuration file of the skin from the local storage in response to one of the integrity and the legitimacy failing to be verified.

Optionally, before sending the configuration file of the target skin to the mini-program, the method further includes: sending a reminder message to the mini-program, in which, the reminder message is configured to remind the mini-program to invoke an application programming interface, API, to receive the configuration file of the target skin.

According to a second aspect, a method for switching a skin of a mini-program page is provided, and performed by a mini-program. The method includes: sending a skin switching request for the mini-program page to a host of the mini-program, in which the skin switching request includes identification information of a target skin; receiving a configuration file of the target skin sent by the host, in which the configuration file of the target skin is acquired by the host based on the skin switching request; performing skin rendering based on the configuration file of the target skin to generate the target skin; and switching a current skin of the mini-program page to the target skin.

Optionally, receiving the configuration file of the target skin sent by the host, includes: receiving a reminder message sent by the host; and invoking an application programming interface, API, based on the reminder message, and receiving the configuration file of the target skin through the API.

Optionally, sending the skin switching request for the mini-program page to the host of the mini-program, includes: acquiring a type of a current page displayed by the mini-program; and generating the skin switching request for the mini-program page and sending the skin switching request to the host in response to recognizing that the type of the current page does not match the current skin of the mini-program page.

According to a third aspect, a method for switching a skin of a mini-program page is provided, and performed by a server. The method includes: receiving a skin download request sent by a host of a mini-program, in which the skin download request includes identification information of a target skin; acquiring a configuration file of the target skin based on the identification information; and sending the configuration file of the target skin to the host.

According to a fourth aspect, an electronic device is provided. The electronic device includes: at least one processor; and a memory communicatively connected to at least one processor; the memory is stored with instructions executable by the at least one processor, the instructions are performed by the at least one processor, to cause the at least one processor to perform the method for switching a skin of a mini-program page as described in the first aspect of the disclosure, or to perform the method for switching a skin of a mini-program page as described in the second aspect of the disclosure, or to perform the method for switching a skin of a mini-program page as described in the third aspect of the disclosure.

According to a fifth aspect, a non-transitory computer readable storage medium stored with computer instructions is provided. The computer instructions are configured to cause a computer to perform the method for switching a skin of a mini-program page as described in the first aspect of the disclosure, to perform the method for switching a skin of a mini-program page as described in the second aspect of the disclosure, or perform the method for switching a skin of a mini-program page as described in the third aspect of the disclosure.

According to a sixth aspect, a computer program product including a computer program is provided. The computer program is configured to perform the method for switching a skin of a mini-program page as described in the first aspect of the disclosure, to perform the method for switching a skin of a mini-program page as described in the second aspect of the disclosure, or perform the method for switching a skin of a mini-program page as described in the third aspect of the disclosure when performed by a processor.

It should be understood that, the content described in the part is not intended to identify key or important features of embodiments of the present disclosure, nor intended to limit the scope of the present disclosure. Other features of the present disclosure will be easy to understand through the following specification.

### BRIEF DESCRIPTION OF THE DRAWINGS

The drawings are intended to better understand the solution, and do not constitute a limitation to the disclosure.
FIG. 1 is a flowchart illustrating a method for switching a skin of a mini-program page according to a first embodiment of the disclosure;
FIG. 2 is a flowchart illustrating a process of acquiring a configuration file of a target skin in the method for switching a skin of a mini-program page according to a second embodiment of the disclosure;
FIG. 3 is a flowchart illustrating a method for switching a skin of a mini-program page according to a third embodiment of the disclosure;
FIG. 4 is a flowchart illustrating a process of sending a skin switching request in the method for switching a skin of a mini-program page according to a fourth embodiment of the disclosure;
FIG. 5 is a flowchart illustrating a method for switching a skin of a mini-program page according to a fifth embodiment of the disclosure;
FIG. 6 is a block diagram illustrating an apparatus for switching a skin of a mini-program page according to a first embodiment of the disclosure;
FIG. 7 is a block diagram illustrating an apparatus for switching a skin of a mini-program page according to a second embodiment of the disclosure;
FIG. 8 is a block diagram illustrating an apparatus for switching a skin of a mini-program page according to a third embodiment of the disclosure;
FIG. 9 is a block diagram illustrating an electronic device configured to achieve the method for switching a skin of a mini-program page according to an embodiment of the disclosure.

### DETAILED DESCRIPTION

The exemplary embodiments of the present disclosure are described as below with reference to the accompanying drawings, which include various details of embodiments of the present disclosure to facilitate understanding, and should be considered as merely exemplary. Therefore, those skilled in the art should realize that various changes and modifications may be made to the embodiments described herein without departing from the scope and spirit of the present disclosure. Similarly, for clarity and conciseness, descriptions of well-known functions and structures are omitted in the following descriptions.

Artificial intelligence (AI), is a new science of technology that studies and develops theories, methods, technologies and application systems configured to simulate, extend and expand human intelligence. At present, AI technology is widely applied due to high automation, high accuracy and low cost.

Intelligent traffic effectively integrates advanced science and technology (information technology, computer technology, data communication technology, sensor technology, electronic control technology, automatic control theory, operational research, artificial intelligence, etc.) in traffic transportation, service control and vehicle manufacturing, to strengthen a relationship among a vehicle, road and a user, thereby forming a comprehensive transportation system that guarantees safety, enhances efficiency, improves environment and saves energy.

In the related art, a skin of a mini-program page cannot be changed, and the skins of pages of different mini-programs are the same, which cannot meet people's requirement for switching the skin of the mini-program, thus affecting the user experience.

Accordingly, a method and an apparatus for switching a skin of a mini-program page, an electronic device, a storage medium and a computer program product are provided.

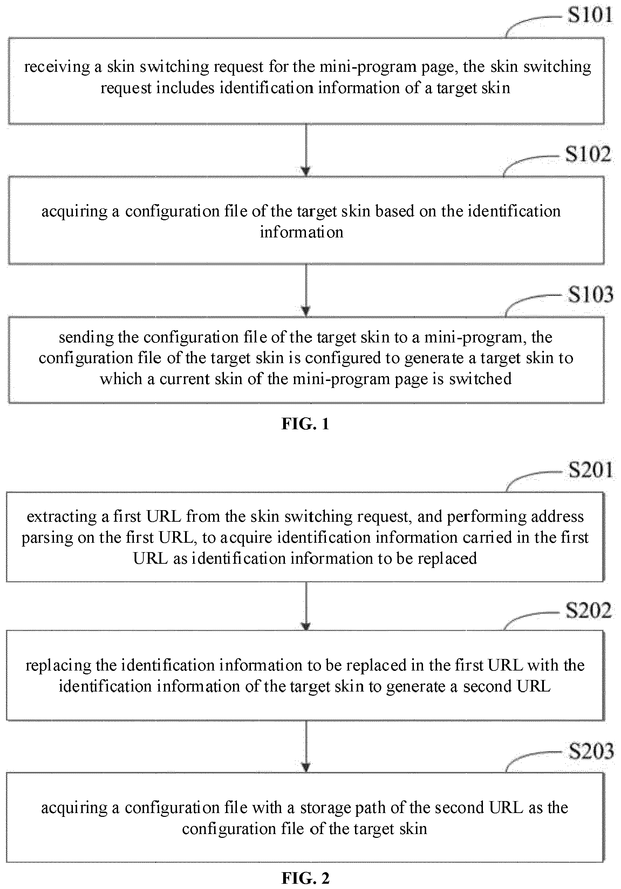

FIG. 1 is a flowchart illustrating a method for switching a skin of a mini-program page according to a first embodiment of the disclosure.

As illustrated in FIG. 1, the method for switching a skin of a mini-program page according to the first embodiment of the disclosure is performed by a host of a mini-program. The method includes the following.

At S101, a skin switching request for the mini-program page is received. The skin switching request includes identification information of a target skin.

It needs to be noted that, an execution subject of the method for switching a skin of a mini-program page in the embodiment of the disclosure may be a host of a mini-program, and the host may include a hardware device with data information processing ability and/or a software necessary for driving the hardware device to work. Alternatively, the host may be configured in a workstation, a server, a computer, a user terminal and other intelligence devices. The user terminal includes but is not limited to a mobile phone, a computer, a smart voice interaction device, a smart appliance, a vehicle-mounted terminal, etc.

In the embodiment of the disclosure, the host of the mini-program may receive the skin switching request for the mini-program page, the skin switching request includes identification information of a target skin. It should be noted that, in the embodiment of the disclosure, a type of the identification information of the target skin is not limited here, for example, the identification information includes but is not limited to a character, a text, etc.

In an implementation, a user may perform a click operation on an interaction interface of the host of the mini-program to trigger the skin switching request for the mini-program page, and correspondingly, the host of the mini-program may receive the skin switching request for the mini-program page. The click operation includes but is not limited to single click, double click, etc., which is not limited here.

In an implementation, the mini-program may send the skin switching request for the mini-program page to the host, and correspondingly, the host of the mini-program may receive the skin switching request for the mini-program page.

At S102, a configuration file of the target skin is acquired based on the identification information.

In the embodiment of the disclosure, the host of the mini-program may acquire the configuration file of the target skin based on the identification information of the target skin. It should be noted that, in the embodiment of the disclosure, a type and content of the configuration file of the target skin are not limited here, for example, the configuration file may be a cascading style sheets (CSS) file, including but not limited to at least one of a font, a background image, color, etc.

It may be understood that, corresponding identification information may be preconfigured for a configuration file of a skin, the identification information corresponds to the configuration file of the skin, and is configured to distinguish configuration files of different skins. In the embodiment of the disclosure, a corresponding configuration file of the target skin may be acquired based on the identification information of the target skin.

For example, identification information corresponding to configuration files 1, 2 of skins are a, b, respectively. When the acquired identification information of the target skin is a, the configuration file 1 of the skin may be acquired as the configuration file of the target skin based on the identification information a, or, when the acquired identification information of the target skin is b, the configuration file 2 of the skin may be acquired as the configuration file of the target skin based on the identification information b.

At S103, the configuration file of the target skin is sent to a mini-program. The configuration file of the target skin is configured to generate the target skin to which a current skink of the mini-program page is switched.

In the embodiment of the disclosure, the host of the mini-program may send the configuration file of the target skin to a mini-program, the configuration file of the target skin is configured to generate the target skin to which a current skink of the mini-program page is switched, thereby achieving skin switching of the mini-program page.

In summary, based on the method for switching a skin of a mini-program page in the embodiment of the disclosure, a skin switching request for the mini-program page is received, the skin switching request includes identification information of a target skin, and a configuration file of the target skin is acquired based on the identification information, and sent to the mini-program, the configuration file of the target skin is configured to generate the target skin to which a current skink of the mini-program page is switched. In this way, the configuration file of the target skin may be acquired based on the identification information of the target skin in the skin switching request and sent to the mini-program, so that the mini-program may generate the target skin based on the configuration file of the target skin and perform skin switching, which may solve the problem of unable to switch the skin of the mini-program page in the related art, thus meeting the user's requirement for switching the skin of the mini-program page.

Based on the above any embodiment, the skin switching request further includes a first uniform resource locator (URL).

Alternatively, the first URL may include a preset default URL.

Alternatively, the first URL may include a URL corresponding to the current skin of the mini-program page. It may be understood that, a corresponding URL may be preconfigured for the configuration file of the skin, the URL corresponds to the configuration file of the skin, and is a storage path of the configuration file of the skin. In the embodiment of the disclosure, the first URL may include the URL corresponding to the current skin of the mini-program page.

As illustrated in FIG. 2, block S102 of acquiring the configuration file of the target skin based on the identification information may be implemented as follows.

At S201, the first URL is extracted from the skin switching request, and address parsing is performed on the first URL to acquire identification information carried in the first URL as identification information to be replaced.

It should be noted that, in the embodiment of the disclosure, identification information is carried in the first URL. The host of the mini-program may extract the first URL from the skin switching request, and perform address parsing on the first URL to acquire the identification information carried the first URL as the identification information to be replaced.

For example, the first URL may be xxxx.b, in which xxxx may be any address, and b is the identification information carried in the first URL, in this case, the host of the mini-program may acquire b as the identification information to be replaced.

At S202, the identification information to be replaced in the first URL is replaced with the identification information of the target skin to generate a second URL.

In the embodiment of the disclosure, the identification information to be replaced in the first URL may be replaced with the identification information of the target skin to generate the second URL.

For example, the first URL may be xxxx.b, in which xxxx may be any address, and b is the identification information carried in the first URL, in this case, the host of the mini-program may acquire b as the identification information to be replaced, and if the acquired identification information of the target skin is a, b in the first URL may be replaced with a to generate xxxx.a, and xxxx.a may be taken as the second URL.

At S203, a configuration file with a storage path of the second URL is acquired as the configuration file of the target skin.

It needs to be noted that, the second URL is a storage path of the configuration file of the target skin. In the embodiment of the disclosure, a configuration file stored in the storage path of the second URL may be acquired as the configuration file of the target skin.

For example, when the generated second URL is xxxx.a, xxxx.a is a storage path of the configuration file 1 of the skin, in this case, the configuration file 1 of the skin stored in the storage path of xxxx.a may be acquired as the configuration file of the target skin.

Therefore, the second URL may be generated based on the first URL in the skin switching request and the identification information of the target skin, and the configuration file stored in the storage path of the second URL is acquired as the configuration file of the target skin.

On the basis of the above any embodiment, S 102 of acquiring the configuration file of the target skin based on the identification information may include: determining whether the configuration file of the target skin exists in a local storage based on the identification information; and acquiring the configuration file of the target skin from the local storage in response to the configuration file of the target skin existing in the local storage.

In the embodiment of the disclosure, a configuration file of a skin may be preset in the local storage of the host of the mini-program. For example, the host of the mini-program may acquire a configuration file of a skin from a server, and store the configuration file of the skin locally.

It may be understood that, the configuration file of the target skin may or may not exist in the local storage of the host of the mini-program.

Further, it is determined whether the configuration file of the target skin exists in the local storage based on the identification information, and the configuration file of the target skin may be acquired from the local storage in response to the configuration file of the target skin existing in the local storage. Therefore, when there is the configuration file of the target skin in the local storage, the configuration file of the target skin may be acquired from the local storage directly, which may save a duration of acquiring the configuration file of the target skin, thereby beneficial to saving a skin switching duration.

Or, a skin download request is sent to a server in response to no configuration file of the target skin existing in the local storage. The skin download request includes the identification information which may be used by the server to acquire the configuration file of the target skin. The configuration file of the target skin sent by the server is received.

Alternatively, the configuration file of the target skin may be locally stored in response to receiving the configuration file of the target skin sent by the server, and the locally stored configuration file of the skin may be updated in real time.

Therefore, when there is no configuration file of the target skin in the local storage, the configuration file of the target skin may be acquired in real time from the server.

Based on the above any embodiment, before the configuration file of the target skin is sent to the mini-program at S103, the method further includes sending a reminder message to the mini-program. The reminder message is configured to remind the mini-program to invoke an application programming interface (API) to receive the configuration file of the target skin.

In the embodiment of the disclosure, the host sends a reminder message to the mini-program to remind the mini-program to invoke the API to receive the configuration file of the target skin, which may ensure that the mini-program may invoke the API to receive the configuration file of the target skin in real time.

On the basis of the above any embodiment, the host of the mini-program may further verify the locally stored configuration file of the skin.

Alternatively, an integrity verification code of a configuration file of a skin may be acquired based on the configuration file of the skin, and an integrity of the configuration file of the skin may be verified based on the integrity verification code.

It may be understood that, the configuration file of the skin may be lack of partial information (that is, incomplete), in the embodiment of the disclosure, the host of the mini-program may acquire an integrity verification code of a configuration file of any skin, and verify an integrity of the configuration file of the any skin based on the integrity verification code.

Alternatively, a set of identification information may be acquired, and a legitimacy of a configuration file of a skin may be verified.

It may be understood that, the configuration file of the skin may be developed by a developer (that is, legitimate), and may be set by a user (that is, illegitimate), in the embodiment of the disclosure, the host of the mini-program may acquire a set of identification information, and verify a legitimacy of a configuration file of any skin.

In an implementation, when there is no identification information of a configuration file of a skin in the set of identification information, it may be recognized that the configuration file of the skin is illegitimate. On the contrary, when there is identification information of a configuration file of a skin in the set of identification information, it may be recognized that the configuration file of the skin is legitimate.

Alternatively, in response to one of the integrity and the legitimacy of a configuration file of a skin failing to be verified, which indicates that the configuration file of the skin is incomplete and/or illegitimate, the configuration file of the skin may be deleted from the local storage, to ensure that the configuration file of the skin in the local storage has integrity and legitimacy, further to ensure the reliability of skin switching.

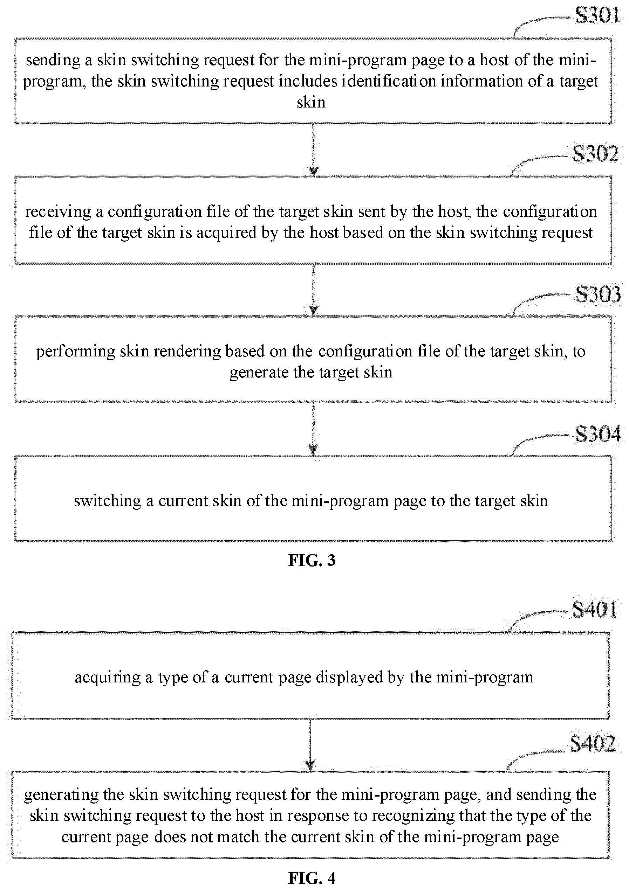

FIG. 3 is a flowchart illustrating a method for switching a skin of a mini-program page according to a third embodiment of the disclosure.

As illustrated in FIG. 3, the method for switching a skin of a mini-program page according to the third embodiment of the disclosure is performed by a mini-program. The method includes the following.

At S301, a skin switching request for the mini-program page is sent to a host of the mini-program, the skin switching request includes identification information of a target skin.

It needs to be noted that, an execution subject of the method for switching a skin of a mini-program page in the embodiment of the disclosure may be a mini-program, and the mini-program may include a hardware device with the data information processing ability and/or a software necessary for driving the hardware device to work. The mini-program may be configured in any host.

In the embodiment of the disclosure, the mini-program may send the skin switching request for the mini-program page to the host of the mini-program, the skin switching request includes the identification information of the target skin. It should be noted that, in the embodiment of the disclosure, a type of the identification information of the target skin is not limited here, for example, the identification information including but not limited to a character, a text, etc.

At S302, a configuration file of the target skin sent by the host is received, the configuration file of the target skin is acquired by the host based on the skin switching request.

In the embodiment of the disclosure, the mini-program may receive the configuration file of the target skin sent by the host, the configuration file of the target skin is acquired by the host based on the skin switching request. It should be noted that, in the embodiment of the disclosure, a type and content of the configuration file of the target skin are not limited here, for example, the configuration file may be a cascading style sheets (CSS) file, including but not limited to at least one of a font, a background image, color, etc.

It may be understood that, corresponding identification information may be preconfigured for a configuration file of a skin, the identification information has a correspondence with the configuration file of the skin, and is configured to distinguish configuration files of different skins. Alternatively, the configuration file of the target skin is acquired by the host based on the identification information of the target skin in the skin switching request.

At S303, skin rendering is performed based on the configuration file of the target skin, to generate the target skin.

In the embodiment of the disclosure, the mini-program may perform skin rendering based on the configuration file of the target skin, to generate the target skin.

Alternatively, the configuration file of the target skin is a CSS file, and the mini-program may load the CCS file for skin rendering, to generate the target skin.

At S304, a current skin of the mini-program page is switched to the target skin.

In summary, based on the method for switching a skin of a mini-program page in the embodiment of the disclosure, a skin switching request for the mini-program page is sent to a host of the mini-program, the skin switching request includes identification information of a target skin, a configuration file of the target skin sent by the host is received, skin rendering is performed based on the configuration file of the target skin to generate the target skin, and a current skin of the target page is switched to the target skin. Therefore, the skin switching request may be sent to the host, the configuration file of the target skin acquired by the host based on the skin switching request may be received, skin rendering may be performed based on the configuration file of the target skin to generate the target skin and skin switching may be performed, which may solve the problem of unable to switch the skin of the mini-program page in the related art, thus meeting the user's requirement for switching the skin of the mini-program page.

On the basis of any above embodiment, as illustrated in FIG. 4, block S301 of sending the skin switching request for the mini-program page to the host of the mini-program may be implemented as follows.

At S401, a type of a current page displayed by the mini-program is acquired.

In the embodiment of the disclosure, the types of pages of the mini-programs may be various, which are not limited here, for example, including but not limited to a chatting page, a shopping page, a reading page, a payment page. The type of the current page displayed by the mini-program may be acquired.

At S402, the skin switching request for the mini-program page is generated, and sent to the host in response to recognizing that the type of the current page does not match the current skin of the mini-program page.

In the embodiment of the disclosure, a matched skin may be preconfigured for a type of a page, the type of the page corresponds to the matched skin, and the types of different pages correspond to different matched skins.

In the embodiment of the disclosure, the mini-program may recognize whether the type of the current page matches the current skin of the mini-program page, and in response to recognizing that the type of the current page does not match the current skin of the mini-program page, which indicates that the current skin of the mini-program page needs to be switched, the skin switching request for the mini-program page may be generated, and sent to the host.

Therefore, the skin switching request for the mini-program page may be automatically generated and sent to the host in response to recognizing that the type of the current page does not match the current skin of the mini-program page.

As another possible implementation, in response to recognizing that the type of the current page matches the current skin of the mini-program page, which indicates that the current skin of the mini-program page does not need to be switched, the skin switching request for the mini-program page is not generated.

Based on the above any embodiment, S302 of receiving the configuration file of the target skin sent by the host may include receiving a reminder message sent by the host, invoking an application programming interface (API) based on the reminder message, and receiving the configuration file of the target skin through the API. Therefore, the mini-program may invoke the API based on the reminder message sent by the host, and further receive the configuration file of the target skin through the API, which may ensure that the mini-program may invoke the API to receive the configuration file of the target skin in real time.

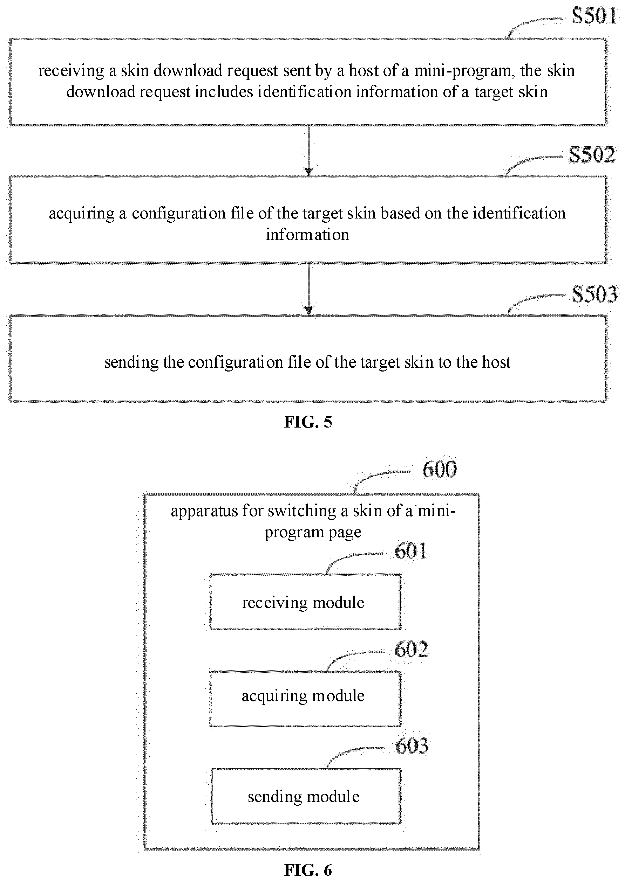

FIG. 5 is a flowchart illustrating a method for switching a skin of a mini-program page according to a fifth embodiment of the disclosure.

As illustrated in FIG. 5, the method for switching a skin of a mini-program page according to the fifth embodiment of the disclosure is performed by a server. The method includes the following.

At S501, a skin download request sent by a host of a mini-program is received, the skin download request includes identification information of a target skin.

It needs to be noted that, an execution subject of the method for switching a skin of a mini-program page in the embodiment of the disclosure may be a server, and the server may provide service for any host.

In the embodiment of the disclosure, the server may receive the skin download request sent by the host of the mini-program, the skin download request includes the identification information of the target skin. It should be noted that, in the embodiment of the disclosure, a type of the identification information of the target skin is not limited here, for example, the identification information includes but is not limited to a character, a text, etc.

At S502, a configuration file of the target skin is acquired based on the identification information.

In the embodiment of the disclosure, the server may acquire the configuration file of the target skin based on the identification information of the target skin. It should be noted that, in the embodiment of the disclosure, a type and content of the configuration file of the target skin are not limited here, for example, the configuration file may be a cascading style sheets (CSS) file, including but not limited to at least one of a font, a background image, color, etc.

It needs to be noted that, a configuration file of a skin may be preconfigured in a storage space of the server, and may be uploaded by a developer to the server.

It may be understood that, corresponding identification information may be preconfigured for a configuration file of a skin, the identification information has a correspondence relationship with the configuration file of the skin, and is configured to distinguish configuration files of different skins. In the embodiment of the disclosure, the corresponding configuration file of the target skin may be acquired based on the identification information of the target skin.

For example, identification information of configuration files 1, 2 of skins are a, b, respectively. When the acquired identification information of the target skin is a, the configuration file 1 of the skin may be acquired as the configuration file of the target skin based on the identification information a, or, when the acquired identification information of the target skin is b, the configuration file 2 of the skin may be acquired as the configuration file of the target skin based on the identification information b.

At S503, the configuration file of the target skin is sent to the host.

In summary, based on the method for switching a skin of a mini-program page in the embodiment of the disclosure, a skin download request for the mini-program page is received, the skin download request includes identification information of a target skin, and a configuration file of the target skin is acquired based on the identification information, and sent to a host. Therefore, the configuration file of the target skin may be acquired based on the identification information of the target skin in the skin download request and sent to the host, and further the host may send the configuration file of the target skin to the mini-program, such that the mini-program may generate the target skin based on the configuration file of the target skin and perform skin switching, which may solve the problem of unable to switch the skin of the mini-program page in the related art, thus meeting the user's requirement for switching the skin of the mini-program page.

FIG. 6 is a block diagram illustrating an apparatus for switching a skin of a mini-program page according to a first embodiment of the disclosure.

As illustrated in FIG. 6, the apparatus 600 for switching a skin of a mini-program page in the embodiment of the disclosure includes a receiving module 601, an acquiring module 602 and a sending module 603.

The receiving module 601 is configured to receive a skin switching request for the mini-program page, the skin switching request includes identification information of a target skin.

The acquiring module 602 is configured to acquire a configuration file of the target skin based on the identification information.

The sending module 603 is configured to send the configuration file of the target skin to a mini-program, the configuration file of the target skin is configured to generate the target skin to which a current skin of the mini-program page is switched.

In an embodiment of the disclosure, the skin switching request includes a first uniform resource locator (URL), the acquiring module 602 is specifically configured to: extract the first URL from the skin switching request, perform address parsing on the first URL to acquire identification information carried in the first URL as identification information to be replaced; replace the identification information to be replaced in the first URL with the identification information of the target skin to generate a second URL; and acquire a configuration file with a storage path of the second URL as the configuration file of the target skin.

In an embodiment of the disclosure, the first URL includes at least one of a preset default URL; a URL corresponding to the current skin of the mini-program page.

In an embodiment of the disclosure, the acquiring module 602 is specifically configured to: determine whether the configuration file of the target skin exists in a local storage based on the identification information of the target skin; and acquire the configuration file of the target skin from the local storage in response to the configuration file of the target skin existing in the local storage.

In an embodiment of the disclosure, the acquiring module 602 is further configured to: send a skin download request to a server in response to no configuration file of the target skin existing in the local storage, in which the skin download request includes the identification information which is used by the server to acquire the configuration file of the target skin; and receive the configuration file of the target skin sent by the server.

In an embodiment of the disclosure, it may further include a verification module, the verification module is configured to: acquire an integrity verification code of a configuration file of a skin based on the configuration file of the skin, and verify an integrity of the configuration file of the skin based on the integrity verification code; and/or, acquire a set of identification information, and verify a legitimacy of a configuration file of a skin; and delete the configuration file of the skin from the local storage in response to one of the integrity and the legitimacy failing to be verified.

In an embodiment of the disclosure, the sending module 603 is further configured to: send a reminder message to the mini-program, in which the reminder message is configured to remind the mini-program to invoke an API to receive the configuration file of the target skin.

In summary, based on the apparatus for switching a skin of a mini-program page in the embodiment of the disclosure, a skin switching request for the mini-program page is received, the skin switching request includes identification information of a target skin, and a configuration file of the target skin is acquired based on the identification information, and sent to the mini-program, the configuration file of the target skin is configured to generate the target skin to which a current skin of the mini-program page is switched. Therefore, the configuration file of the target skin may be acquired based on the identification information of the target skin in the skin switching request and sent to the mini-program, so that the mini-program may generate the target skin based on the configuration file of the target skin and perform skin switching, which may solve the problem of unable to switch the skin of the mini-program page in the related art, thus meeting the user's requirement for switching the skin of the mini-program page.

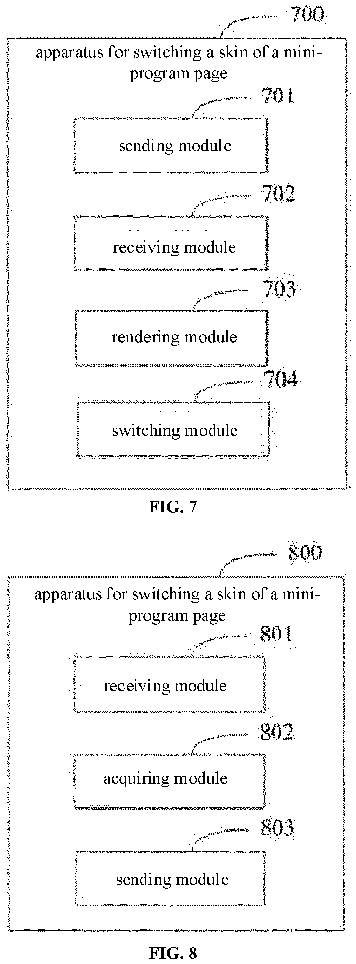

FIG. 7 is a block diagram illustrating an apparatus for switching a skin of a mini-program page according to a second embodiment of the disclosure.

As illustrated in FIG. 7, the apparatus 700 for switching a skin of a mini-program page in the embodiment of the disclosure includes a sending module 701, a receiving module 702, a rendering module 703 and a switching module 704.

The sending module 701 is configured to send a skin switching request for the mini-program page to a host of the mini-program, the skin switching request includes identification information of a target skin.

The receiving module 702 is configured to receive a configuration file of the target skin sent by the host, the configuration file of the target skin is acquired by the host based on the skin switching request.

The rendering module 703 is configured to perform skin rendering based on the configuration file of the target skin, to generate the target skin.

The switching module 704 is configured to switch a current skin of the mini-program page to the target skin.

In an embodiment of the disclosure, the receiving module 702 is specifically configured to: receive a reminder message sent by the host; invoke an API based on the reminder message, and receive the configuration file of the target skin through the API.

In an embodiment of the disclosure, the sending module 701 is specifically configured to: acquire a type of a current page displayed by the mini-program; generate the skin switching request for the mini-program page and send the skin switching request to the host in response to recognizing that the type of the current page does not match the current skin of the mini-program page.

In summary, based on the apparatus for switching a skin of a mini-program page in the embodiment of the disclosure, a skin switching request for the mini-program page is sent to the host of the mini-program, the skin switching request includes identification information of a target skin, a configuration file of the target skin sent by the host is received, skin rendering is performed based on the configuration file of the target skin to generate the target skin, and a current skin of the target page is switched to the target skin. Therefore, the skin switching request may be sent to the host, the configuration file of the target skin acquired by the host based on the skin switching request may be received, skin rendering may be performed based on the configuration file of the target skin to generate the target skin and skin switching may be performed, which may solve the problem of unable to switch the skin of the mini-program page in the related art, thus meeting the user's requirement for switching the skin of the mini-program page.

FIG. 8 is a block diagram illustrating an apparatus for switching a skin of a mini-program page according to a third embodiment of the disclosure.

As illustrated in FIG. 8, the apparatus 800 for switching a skin of a mini-program page in the embodiment of the disclosure includes a receiving module 801, an acquiring module 802 and a sending module 803.

The receiving module 801 is configured to receive a skin download request sent by a host of a mini-program, the skin download request includes identification information of a target skin.

The acquiring module 802 is configured to acquire a configuration file of the target skin based on the identification information.

The sending module 803 is configured to send the configuration file of the target skin to the host.

In summary, the apparatus for switching a skin of a mini-program page in the embodiment of the disclosure receives a skin download request sent by a host of a mini-program, in which the skin download request includes identification information of a target skin, acquires a configuration file of the target skin based on the identification information, and sends the configuration file of the target skin to the host. Therefore, the configuration file of the target skin may be acquired based on the identification information of the target skin in the skin download request and sent to the host, and further the host may send the configuration file of the target skin to the mini-program, such that the mini-program may generate the target skin based on the configuration file of the target skin and perform skin switching, which may solve the problem of unable to switch the skin of the mini-program page in the related art, thus meeting the user's requirement for switching the skin of the mini-program page.

An electronic device, a readable storage medium and a computer program product are further provided according to embodiments of the disclosure.

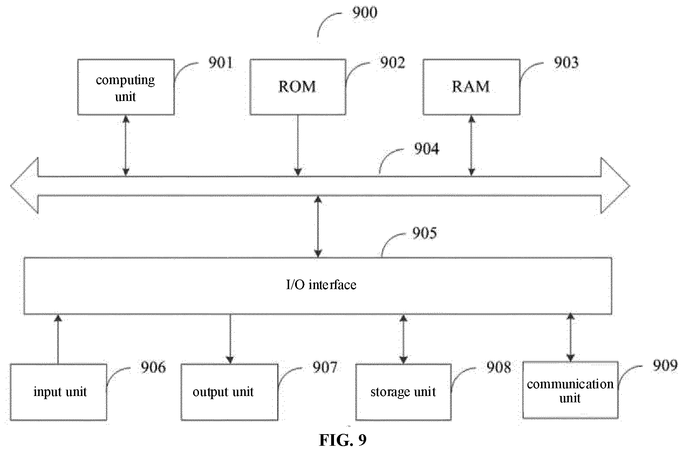

FIG. 9 is a schematic block diagram illustrating an example electronic device 900 in the embodiment of the present disclosure. An electronic device is intended to represent various types of digital computers, such as laptop computers, desktop computers, workstations, personal digital assistants, servers, blade servers, mainframe computers, and other suitable computers. An electronic device may also represent various types of mobile apparatuses, such as personal digital assistants, cellular phones, smart phones, wearable devices, and other similar computing devices. The components shown herein, their connections and relations, and their functions are merely examples, and are not intended to limit the implementation of the disclosure described and/or required herein.

As shown in FIG. 9, an electronic device 900 includes a computing unit 901, configured to execute various appropriate actions and processes according to a computer program stored in a read-only memory (ROM) 902 or loaded from a memory unit 908 to a random access memory (RAM) 903. In a RAM 903, various programs and data required for an electronic device 900 may be stored. The computing unit 901, the ROM 902 and the ROM 903 may be connected with each other by a bus 904. An input/output (I/O) interface 905 is also connected to the bus 904.

A plurality of components in the electronic device 900 are connected to the I/O interface 905, including: an input unit 906, for example, a keyboard, a mouse, etc.; an output unit 907, for example various types of displays, speakers; a storage unit 908, for example a magnetic disk, an optical disk; and a communication unit 909, for example, a network card, a modem, a wireless transceiver. The communication unit 909 allows an electronic device 900 to exchange information/data through a computer network such as internet and/or various types of telecommunication networks and other devices.

The computing unit 901 may be various types of general and/or dedicated processing components with processing and computing ability. Some examples of a computing unit 901 include but not limited to a central processing unit (CPU), a graphics processing unit (GPU), various dedicated artificial intelligence (AI) computing chips, various computing units running a machine learning model algorithm, a digital signal processor (DSP), and any appropriate processor, controller, microcontroller, etc. The computing unit 901 performs various methods and processings as described above, for example, the method for switching a skin of a mini-program page as described in FIGS. 1 to 5. For example, in some embodiments, the method for switching a skin of a mini-program page may be further implemented as a computer software program, which is physically contained in a machine readable medium, such as the storage unit 908. In some embodiments, a part or all of the computer program may be loaded and/or installed on the electronic device 900 through the ROM 902 and/or the communication unit 909. When the computer program is loaded on the RAM 903 and executed by the computing unit 901, one or more blocks in the above method for switching a skin of a mini-program page may be performed. Alternatively, in other embodiments, the computing unit 901 may be configured to perform the method for switching a skin of a mini-program page in other appropriate ways (for example, by virtue of a firmware).

Various implementation modes of systems and technologies described herein may be implemented in a digital electronic circuit system, an integrated circuit system, a field programmable gate array(FPGA), a dedicated application specific integrated circuit (ASIC), a system on a chip (SoC), a load programmable logic device (CPLD), a computer hardware, a firmware, a software, and/or combinations thereof. The various implementation modes may include: being implemented in one or more computer programs, and the one or more computer programs may be executed and/or interpreted on a programmable system including at least one programmable processor, and the programmable processor may be a dedicated or a general-purpose programmable processor that may receive data and instructions from a storage system, at least one input apparatus, and at least one output apparatus, and transmit the data and instructions to the storage system, the at least one input apparatus, and the at least one output apparatus.

A computer code configured to execute a method in the present disclosure may be written with one or any combination of multiple programming languages. These programming languages may be provided to a processor or a controller of a general purpose computer, a dedicated computer, or other apparatuses for programmable data processing so that the function/operation specified in the flowchart and/or block diagram may be performed when the program code is executed by the processor or controller. A computer code may be executed completely or partly on the machine, executed partly on the machine as an independent software package and executed partly or completely on the remote machine or server.

In the context of the present disclosure, a machine-readable medium may be a tangible medium that may contain or store a program intended for use in or in conjunction with an instruction execution system, apparatus, or device. A machine-readable medium may be a machine readable signal medium or a machine readable storage medium. A machine readable storage medium may include but not limited to an electronic, magnetic, optical, electromagnetic, infrared, or semiconductor system, apparatus or device, or any appropriate combination thereof. A more specific example of a machine readable storage medium includes an electronic connector with one or more cables, a portable computer disk, a hardware, a random access memory (RAM), a read-only memory (ROM), an erasable programmable read-only memory (an EPROM or a flash memory), an optical fiber device, and a portable optical disk read-only memory (CDROM), an optical storage device, a magnetic storage device, or any appropriate combination of the above.

In order to provide interaction with the user, the systems and technologies described here may be implemented on a computer, and the computer has: a display apparatus for displaying information to the user (for example, a CRT (cathode ray tube) or a LCD (liquid crystal display) monitor); and a keyboard and a pointing apparatus (for example, a mouse or a trackball) through which the user may provide input to the computer. Other types of apparatuses may further be configured to provide interaction with the user; for example, the feedback provided to the user may be any form of sensory feedback (for example, visual feedback, auditory feedback, or tactile feedback); and input from the user may be received in any form (including an acoustic input, a voice input, or a tactile input).

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation mode of the system and technology described herein), or a computing system including any combination of such back-end components, middleware components or front-end components. The system components may be connected to each other through any form or medium of digital data communication (for example, a communication network). Examples of communication networks include: a local area network (LAN), a wide area network (WAN), and an internet.

The computer system may include a client and a server. The client and server are generally far away from each other and generally interact with each other through a communication network. The relation between the client and the server is generated by computer programs that run on the corresponding computer and have a client-server relationship with each other. A server may be a cloud server, also known as a cloud computing server or a cloud host, is a host product in a cloud computing service system, to solve the shortcomings of large management difficulty and weak business expansibility existed in the traditional physical host and Virtual Private Server (VPS) service. A server further may be a server with a distributed system, or a server in combination with a blockchain.

According to the embodiment of the disclosure, a computer program product including a computer program is further provided in the disclosure, the computer program is configured to achieve the method for switching a skin of a mini-program page as described in the above embodiment when perform by a processor.

It should be understood that, various forms of procedures shown above may be configured to reorder, add or delete blocks. For example, blocks described in the present disclosure may be executed in parallel, sequentially, or in a different order, as long as the desired result of the technical solution disclosed in the present disclosure may be achieved, which will not be limited herein.

The forgoing description is only directed to preferred embodiments of the present disclosure, but not used to limit the present disclosure. It would be appreciated by those skilled in the art that various modifications, combinations and replacements of the above embodiments can be made according to design requirements and other factors.

## Claims

1. A method for switching a skin of a mini-program page, comprising:
receiving (S101) a skin switching request for the mini-program page, wherein, the skin switching request comprises first identification information of a target skin;
acquiring (S102) a configuration file of the target skin based on the first identification information; and
sending (S103) the configuration file of the target skin to a mini-program, wherein, the configuration file of the target skin is configured to generate the target skin to which a current skin of the mini-program page is switched.

2. The method of claim 1, wherein, the skin switching request comprises a first uniform resource locator, URL, wherein, acquiring (S102) the configuration file of the target skin based on the first identification information, comprises:
extracting (S201) the first URL from the skin switching request, and performing address parsing on the first URL to acquire second identification information carried in the first URL as identification information to be replaced;
replacing (S202) the identification information to be replaced in the first URL with the first identification information to generate a second URL; and
acquiring (S203) a configuration file with a storage path of the second URL as the configuration file of the target skin.

3. The method of claim 2, wherein, the first URL comprises at least one of:
a preset default URL;
a URL corresponding to the current skin of the mini-program page.

4. The method of any of claims 1 to 3, wherein, acquiring (S102) the configuration file of the target skin based on the first identification information, comprises:
determining whether the configuration file of the target skin exists in a local storage based on the first identification information; and
acquiring the configuration file of the target skin from the local storage in response to the configuration file of the target skin existing in the local storage.

5. The method of claim 4, further comprising:
sending a skin download request to a server in response to no configuration file of the target skin existing in the local storage, wherein, the skin download request comprises the first identification information used by the server to acquire the configuration file of the target skin; and
receiving the configuration file of the target skin sent by the server.

6. The method of claim 4 or 5, further comprising:
acquiring an integrity verification code of a configuration file of a skin based on the configuration file of the skin, and verifying an integrity of the configuration file of the skin based on the integrity verification code; and/or, acquiring a set of identification information, and verifying a legitimacy of a configuration file of a skin; and
deleting the configuration file of the skin from the local storage in response to one of the integrity and the legitimacy failing to be verified.

7. The method of any of claims 1-6, wherein, before sending (S103) the configuration file of the target skin to the mini-program, further comprising:
sending a reminder message to the mini-program, wherein, the reminder message is configured to remind the mini-program to invoke an application programming interface, API, to receive the configuration file of the target skin.

8. A method for switching a skin of a mini-program page, comprising:
sending (S301) a skin switching request for the mini-program page to a host of the mini-program, wherein, the skin switching request comprises identification information of a target skin;
receiving (S302) a configuration file of the target skin sent by the host, wherein, the configuration file of the target skin is acquired by the host based on the skin switching request;
performing (S303) skin rendering based on the configuration file of the target skin to generate the target skin; and
switching (S304) a current skin of the mini-program page to the target skin.

9. The method of claim 8, wherein, receiving (S302) the configuration file of the target skin sent by the host, comprises:
receiving a reminder message sent by the host; and
invoking an application programming interface, API, based on the reminder message, and receiving the configuration file of the target skin through the API.

10. The method of claim 8 or 9, wherein, sending (S301) the skin switching request for the mini-program page to the host of the mini-program, comprises:
acquiring (S401) a type of a current page displayed by the mini-program; and
generating (S402) the skin switching request for the mini-program page and sending the skin switching request to the host in response to recognizing that the type of the current page does not match the current skin of the mini-program page.

11. A method for switching a skin of a mini-program page, comprising:
receiving (S501) a skin download request sent by a host of a mini-program, wherein, the skin download request comprises identification information of a target skin; and
acquiring (S502) a configuration file of the target skin based on the identification information; and
sending (S503) the configuration file of the target skin to the host.

12. An electronic device, comprising:
at least one processor; and
a memory communicatively connected to the at least one processor; wherein,
the memory is stored with instructions executable by the at least one processor, the instructions are performed by the at least one processor, to cause the at least one processor to perform the method of any of claims 1 to 7 or the method of any of claims 8 to 10 or the method of claim 11.

13. A non-transitory computer readable storage medium stored with computer instructions, wherein, the computer instructions are configured to cause a computer to perform the method of any of claims 1 to 7 or the method of any of claims 8 to 10 or the method of claim 11.

14. A computer program product comprising a computer program, wherein, the computer program is configured to achieve the method of any of claims 1 to 7 or the method of any of claims 8 to 10 or the method of claim 11 when performed by a processor.
